**Europäisches Patentamt**

**European Patent Office**

**Office européen des brevets**

(11) Veröffentlichungsnummer: **0 167 079**
**B1**

(12) **EUROPÄISCHE PATENTSCHRIFT**

(45) Veröffentlichungstag der Patentschrift:
25.01.89

(21) Anmeldenummer: 85107781.8

(22) Anmeldetag: 24.06.85

(51) Int. Cl.⁴: **H 02 H 3/33**

(54) **Differenzstromschutzschalter.**

(30) Priorität: 06.07.84 DE 3424959

(43) Veröffentlichungstag der Anmeldung:
08.01.86 Patentblatt 86/2

(45) Bekanntmachung des Hinweises auf die Patenterteilung:
25.01.89 Patentblatt 89/4

(84) Benannte Vertragsstaaten:
**BE DE FR GB IT NL**

(56) Entgegenhaltungen:
**EP-A-0 069 655**
**FR-A-2 416 580**

(73) Patentinhaber: **Siemens Aktiengesellschaft Berlin und München, Wittelsbacherplatz 2, D-8000 München 2 (DE)**

(72) Erfinder: **Harr, Dieter, Friedrich- Ebert- Strasse 63, D-8400 Regensburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Differenzstromschutzschalter mit einer Transduktorschaltung, deren Sekundärwicklung mit einem Meßwiderstand in Serienschaltung an einen Rechteckgenerator angeschlossen ist, wobei an einem Abgriff zwischen Sekundärwicklung und Meßwiderstand eine Auswerteschaltung angeschlossen ist, die mit einer Auslöseeinrichtung in Verbindung steht, die über ein Schaltschloß auf Schaltkontakte in den zu überwachenden Leitungen einwirkt.

Derartige Transduktorschaltungen sind bekannt (Hartel/Dietz, Transduktorschaltungen, Springer Verlag 1966, Seite 62 ff). Dabei wird die Sekundärseite einer Transduktorschaltung durch eine angelegte, hochfrequente Wechselspannung bis nahe an die Sättigungsgrenze wechselmagnetisiert. In Serienschaltung mit der Sekundärwicklung ist ein Meßwiderstand angeordnet, wo Signale für eine Auswerteschaltung abgegriffen werden können. Wenn durch die Primärwicklung ein Strom fließt, wird in der Sekundärwicklung ein Strom induziert, der dort dem Wechselmagnetisierungsstrom überlagert wird. Dadurch wird die Sättigungsgrenze überschritten und der induktive Widerstand der Sekundärwicklung wird kleiner. Als Folge davon wird die Spannungsamplitude am Meßwiderstand größer. In der Auswerteschaltung wird die Spannung am Meßwiderstand mit einer zuvor eingestellten Schwellspannung verglichen und bei Überschreiten der Schwellspannung die Auslöseeinrichtung aktiviert, die dann die zu überwachende Leitung unterbricht.

Differenzstromschutzschalter benötigen eine in der Sekundärwicklung induzierte Spannung, die so groß ist, daß die Spannungsamplitude am Meßwiderstand deutlich erhöht und sonach die Auslöseeinrichtung sicher ausgelöst wird. Deshalb muß in den Primärwicklungen ein entsprechendes Magnetfeld erzeugt werden, was bei vorgegebener Stromstärke eine bestimmte Windungszahl der Primärwicklungen erforderlich macht.

Wicklungen mit großer Windungszahl erwärmen sich aber im Betrieb stärker als kleinere Wicklungen. Es sind daher für die Wärmeabfuhr besondere Maßnahmen zu treffen. Darüber hinaus steigen die Herstellungskosten, wie auch der Platzbedarf im möglichst kleinen Gehäuse eines Differenzstromschutzschalters mit der Größe der Wicklungen.

Der Erfindung liegt die Aufgabe zugrunde, einen Differenzstromschutzschalter zu entwickeln, der bei der Differenzstromerfassung mit einer Transduktorschaltung auskommt, die mit Primärwicklungen aus nur je einer Windung arbeiten kann.

Diese Aufgabe wird erfindungsgemäß dadurch gelöst, daß der Meßwiderstand ein komplexer, überwiegend kapazitiver Widerstand ist, der zusammen mit der Sekundärwicklung einen Schwingkreis bildet.

Durch den Schwingkreis wird die Spannungsamplitude im Sekundärkreis erhöht. Sonach ist ein sicheres Auslösen des Differenzstromschutzschalters auch dann gewährleistet, wenn in der Sekundärwicklung nur eine Spannung mit kleiner Amplitude induziert wird.

Im Vergleich mit einer üblichen Transduktorschaltung ohne Schwingkreis ermöglicht der Einsatz eines Schwingkreises nach der Erfindung eine vorteilhafte Verkleinerung der magnetischen Feldstärke in der Sekundärwicklung. Die felderzeugenden Primärwicklungen kommen sonach mit einer so kleinen Windungszahl aus, daß die Wärmeabfuhr problemlos ist und Kosten sowie Platzbedarf der Primärwicklungen gering sind.

Der komplexe Widerstand, der zusammen mit der Sekundärwicklung den Schwingkreis bildet, kann beispielsweise ein Kondensator sein. Nach einer Ausgestaltung kann diesem Kondensator eine Serienschaltung aus einem zweiten, kleineren Kondensator mit einem ohmschen Widerstand parallelgeschaltet sein.

Nach einer anderen Weiterbildung ist in den Schwingkreis ein ohmscher Dämpfungswiderstand eingeschaltet. Die Sekundärwicklung, der Meßwiderstand, die Schwellspannung sowie die Generatorfrequenz sind aufeinander abgestimmt. Wenn die Verluste des Eisenkerns der Sekundärwicklung möglichst kleingehalten werden sollen, damit dessen Hystereseschleife möglichst rechteckig bleibt, dann benötigt die Transduktorschaltung eine niedrige Generatorfrequenz. Um die Abhängigkeit des Auslösestromes von der Phasenverschiebung zwischen Spannungsversorgung und Differenzstrom zu begrenzen, benötigt die Transduktorschaltung eine hohe Generatorfrequenz.

Die optimale Generatorfrequenz unterscheidet sich von der Resonanzfrequenz des Schwingkreises. Rückkopplungsschwingungen werden durch den Dämpfungswiderstand verhindert, der sonach eine zuverlässige Funktion der Auswerteschaltung sichert. Er ermöglicht, daß der Differenztromschutzschalter bei Wechseldifferenzstrom, Einwegdifferenzstrom oder Gleichdifferenzstrom arbeiten kann.

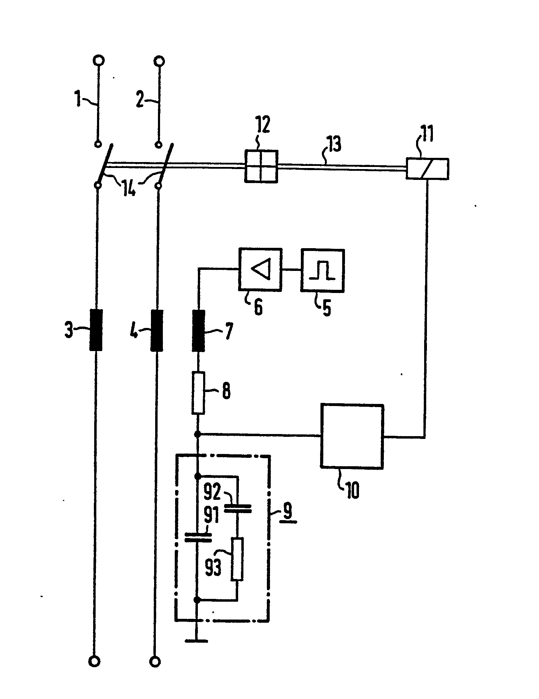

Die Erfindung soll anhand eines in der Zeichnung grob schematisch wiedergegebenen Ausführungsbeispiels näher erläutert werden:

Die Zeichnung zeigt einen Differenzstromschutzschalter mit einer Transduktorschaltung.

Der Differenzstromschutzschalter nach der Zeichnung überwacht einen Phasenleiter 1 und einen Nulleiter 2, die Primärwicklungen 3 und 4 des Steuerkreises einer Transduktorschaltung enthalten. Die Primärwicklungen 3 und 4 können Durchführungen des Phasenleiters 1 und des Nulleiters 2 durch einen Summenstromwandler sein. Ein Rechteckgenerator 5 steht über einen Verstärker 6 mit der ersten Anschlußklemme einer Sekundärwicklung 7 der Transduktorschaltung in Verbindung. Die zweite Anschlußklemme der Sekundärwicklung 7 ist in Serienschaltung mit einem ohmschen Dämpfungswiderstand 8 und einem komplexen Widerstand 9 verbunden, dessen zweiter Anschluß an Nullpotentiel liegt. Mit einem Abgriff zwischen dem Dämpfungswiderstand 8 und dem komplexen Widerstand 9 ist eine Auswerteschaltung 10 verbunden, die mit einer Auslöseeinrichtung 11 in Verbindung steht. Diese Auslöseeinrichtung 11 steht mit einem Schaltschloß 12 in Eingriffverbindung 13, das auf Schaltkontakte 14 in den zu überwachenden Leitungen 1 und 2 wirkt.

Der komplexe Widerstand 9 ist ein überwiegend kapazitiver Widerstand, der durch einen Kondensator 91 gebildet ist. Ein weiterer Kondensator 92 und ein ohmscher Widerstand 93 in Serienschaltung sind im Ausführungsbeispiel parallel zum Kondensator 91 angeordnet, um insbesondere bei Gleichdifferenzstrom den ohmschen Dämpfungs-Widerstand 8 in seiner Funktion zu ergänzen.

Der komplexe Widerstand 9 bildet zusammen mit der Sekundärwicklung 7 der Transduktorschaltung einen Schwingkreis, der die Spannungsamplitude am komplexen Widerstand 9 im Sekundärkreis erhöht. Deshalb kommt man bei den Primärwicklungen 3 und 4 für ein ausreichendes Magnetfeld mit nur einer Windung aus.

Durch den geschilderten Differenzstromschutzschalter können statt Phasenleiter 1 und Nulleiter 2 ebenso nur ein Primärleiter oder mehr als zwei Primärleiter überwacht werden.

## Patentansprüche

1. Differenzstromschutzschalter mit einer Transduktorschaltung, deren Sekundärwicklung (7) mit einem Meßwiderstand (9) in Serienschaltung an einen Rechteckgenerator (5) angeschlossen ist, wobei an einem Abgriff zwischen Sekundärwicklung (7) und Meßwiderstand (9) eine Auswerteschaltung (10) angeschlossen ist, die mit einer Auslöseeinrichtung (11) in Verbindung steht, die über ein Schaltschloß (12) auf Schaltkontakte (14) in den zu überwachenden Leitungen (1 und 2) einwirkt, dadurch gekennzeichnet, daß der Meßwiderstsnd (9) ein komplexer, überwiegend kapazitiver Widerstand ist, der zusammen mit der Sekundärwicklung (7) einen Schwingkreis bildet.

2. Differenzstromschutzschalter nach Anspruch 1, dadurch gekennzeichnet, daß der Meßwiderstand (9) ein Kondensator (91) ist.

3. Differenzstromschutzschalter nach Anspruch 2, dadurch gekennzeichnet, daß parallel zum Kondensator (91) ein weiterer Kondensator (92) in Serienschaltung mit einem ohmschen Widerstand (93) angeordnet ist.

4. Differenzstromschutzschalter nach Anspruch 1, dadurch gekennzeichnet, daß Zwischen der Sekundärwicklung (7) und dem komplexen Widerstand (9) ein ohmscher Dämpfungswiderstand (8) in Serienschaltung angeordnet ist.

## Claims

1. Differential current protective circuit breaker with a transductor circuit, the secondary winding (7) of which is connected with a precision impedance (9) in series connection to a square-wave generator (5), there being connected to a tap between secondary winding (7) and precision impedance (9) an evaluation circuit (10) which communicates with a tripping device (11) which acts by way of a switch latch (12) on switching contacts (14) in the lines (1 and 2) to be monitored, characterised in that the precision impedance (9) is a complex, predominantly capacitive impedance which, together with the secondary winding (7), forms an oscillating circuit.

2. Differential current protective circuit breaker according to claim 1, characterised in that the precision impedance (9) is a capacitor (91).

3. Differential current protective circuit breaker according to claim 2, characterized in that arranged in parallel with the capacitor (91) there is a further capacitor (92) in series connection with an ohmic impedance (93).

4. Differential current protective circuit breaker according to claim 1, characterized in that arranged between the secondary winding (7) and the complex impedance (9) there is an ohmic damping impedance (8) in series connection.

## Revendications

1. Disjoncteur à courant différentiel, comprenant un montage transducteur dont l'enroulement secondaire (7) est connecté en série avec une résistance de mesure (9) à un générateur rectangle (5), avec raccordement, à une prise entre l'enroulement secondaire (7) et la résistance de mesure (9), d'un circuit d'exploitation (10) qui est en liaison avec un dispositif de déclenchement (11) qui agit par l'intermédiaire d'un verrou de maintien (12) sur des contacts de coupure (14) dans les lignes (1 et 2) à surveiller, caractérisé en ce que la résistance de mesure (9) est une résistance complexe, principalement capacitive, qui forme un circuit oscillant ensemble avec l'enroulement secondaire (7).

2. Disjoncteur selon la revendication 1, caractérisé en ce que la résistance de mesure (9) est un condensateur (91).

3. Disjoncteur selon la revendication 2, caractérisé en ce qu'un condensateur supplémentaire (92) en série avec une résistance ohmique (93) est connecté en parallèle avec le condensateur (91).

4. Disjoncteur selon la revendication 1, caractérisé en ce qu'une résistance ohmique d'amortissement (8) est montée en série entre l'enroulement secondaire (7) et la résistance complexe (9).